# EUROPEAN PATENT SPECIFICATION

(11) **EP 1 592 267 B1**
(45) Date of publication and mention of the grant of the patent: **24.01.2007**
(21) Application number: 05009147.9
(22) Date of filing: 26.04.2005
(51) Int. Cl.: H04Q 7/22

(54) **Data delivery device and method for changing data delivery time**
Vorrichtung zur Datenübermittlung und Verfahren zum Wechseln der Datenübermittlungszeit
Appareil de livraison de données et procédé pour le changement du temps de livraison de données

(30) Priority: 27.04.2004 JP 2004132000
(43) Date of publication of application: 02.11.2005
(73) Proprietor: NTT DoCoMo, Inc., Tokyo 100-6150 (JP)
(72) Inventor: Takeichi, Masato, 2-chome Chiyoda-ku Tokyo 100-6150 (JP); Kobayashi, Hironori, 2-chome Chiyoda-ku Tokyo 100-6150 (JP)
(74) Representative: GROSSE BOCKHORNI SCHUMACHER

(56) References cited:
- EP-A- 0 849 920
- EP-A- 1 077 557
- EP-A- 1 278 390
- US-A1- 2003 045 273

## Description

### BACKGROUND OF THE INVENTION

### Field of the Invention

The present invention relates to a data delivery device for delivering data and a method for changing data delivery time in response to a request from a mobile terminal.

### Related Background of the Invention

In the method for communicating of the mobile terminal, it is considered that virus check is carried out by an antivirus program to protect against infection of a computer virus. When the virus check is carried out, it is necessary to obtain pattern data concerning a virus at regular time intervals, so as to cope with a new virus. The mobile terminal has previously been set with the time into itself when the mobile terminal requests delivery of pattern data, in order to obtain the pattern data at regular time intervals. Then, the mobile terminal requests the pattern data from the data delivery device such as server at the set time. The data delivery device that has received the request delivers the pattern data to the mobile terminal that has requested it.

An invention that delivers the data etc. at regular time intervals is described in Japanese Patent Application Laid-open No. 2002-288092. The invention described therein relates to an electronic mail device, delivering the mail from the mail delivery device at regular time intervals.

US 2003/0045273 A1 and EP 1 278 390 A1 describe data delivery mechanisms in mobile communication networks wherein the delivery decision is mainly based on the current traffic load of the networks.

### SUMMERY OF THE INVENTION

However, as the number of mobile terminals increases, the number of events for the requests of data delivery increases, so that the processes of the requests are possibly concentrated in the data delivery device that has accepted the delivery requests. As a result, the system resource of the network and data delivery device becomes tight, and the constraints on the calling and/or the access to the data delivery device are activated, so that the problem that the mobile terminal cannot obtain the pattern data will occur. In addition, the invention described in Japanese Patent Application Laid-open No. 2002-288092 will also have the same problem that if many mails concentrate at the same period of time during mail delivery, the load of the electronic mail system that delivers becomes high.

The present invention, therefore, in order to solve the problem above, has an object to provide the data delivery device and the method for changing data delivery time, which control delivery on basis of the destination where the mobile terminal intends moving, so as not to concentrate the requests of the data delivery with the mobile terminal and the data delivery with the data delivery device at the same period of time.

A data delivery device according to the present invention, to solve the problem above, is the data delivery device that delivers data to a mobile terminal, including: position information storage means for storing intended position information that concerns a intended position of the mobile terminal during every period of time; traffic information storage means for storing predictive traffic information concerning predicted traffic at each position during every period of time; and decision means for extracting the predicted traffic at the intended position of the mobile terminal during every period of time, on the basis of the intended position information stored into the position information storage means and the predictive traffic information stored in the traffic information storage means, and for deciding the delivery time of data, on the basis of the extracted traffic that is predicted at the intended position of the mobile terminal during every period of time.

Further, a method for changing data delivery time according to the present invention is the method for changing data delivery time of the data delivery device that delivers data to a mobile terminal at predetermined time, including the steps of: extracting predicted traffic at the intended position of the mobile terminal during every period of time, on the basis of the intended position information concerning the intended position of the mobile terminal during every period of time and the predictive traffic information concerning the predicted traffic at each position of the mobile terminal during every period of time; and deciding a data delivery time, on the basis of the extracted traffic that is predicted at the intended position of the mobile terminal during every period of time.

According to the present invention above, by extracting predicted traffic at the intended position of the mobile terminal during every period of time, on the basis of the intended position information and the predictive traffic information, and deciding the data delivery time, on the basis of the extracted traffic at the intended position of the mobile terminal during every period of time, it is possible to decide the delivery time in order that the traffic amount does not become high at the intended position of the mobile terminal. Therefore, it is possible to prevent the traffic amount from becoming high. Further, it is possible to prevent the load of the data delivery device from becoming high, which processes delivery during the same period of time due to increase in the number of delivery destinations to deliver data at regular intervals. Furthermore, it is possible to prevent the data from not being obtained by the user, with communication constraint of the communication provider due to the traffic amount that has become high.

Preferably, the decision means of the data delivery device of the present invention is constructed to decide the data delivery time again, in case of judgement that the allowable transfer capacity of the network of the wireless base station with which the mobile terminal communicates at the predicted delivery time is less than or equal to the predetermined threshold value.

According to the present invention, the decision means has a function that decides the data delivery time again, in case of judgement that the allowable transfer capacity of the network of the wireless base station which the mobile terminal uses at the predicted delivery time is less than or equal to the predetermined threshold value, so that it is possible to prevent the loss of the user's convenience due to frequent change of the data delivery time.

By extracting predicted traffic at the intended position of the mobile terminal during every period of time, on the basis of the intended position information and the predictive traffic information, and by deciding the data delivery time, on the basis of the extracted traffic at the intended position of the mobile terminal during every period of time, the present invention can decide the delivery time in order that the traffic amount does not become high at the intended position of the mobile terminal. Accordingly, the present invention can prevent the traffic amount from becoming high. Further, the present invention can prevent the load of the data delivery device from becoming high, which processes delivery at the same period of time due to increase in the number of delivery destinations to deliver data at regular intervals. Furthermore, the present invention can prevent the data from not being obtained by the user due to communication constraint of the communication provider due to the traffic amount that has become high.

### BRIEF DESCRIPTION OF THE DRAWINGS

FIG. 1 is a system constructive view of a network in which a data delivery device of the present invention is arranged;

FIG. 2 is a block constructive view of the data delivery device of the present invention;

FIG. 3 is an illustration of a position information database;

FIG. 4 is a process flow diagram of a position information management unit;

FIG. 5 is the illustrative view of the intended position information created by a position information management unit;

FIG. 6 is an illustrative view of past traffic information stored in a traffic database;

FIG. 7 shows the illustrative view of predictive traffic information of each wireless base station created by a NW situation management unit;

FIG. 8 is an illustrative view of a block diagram of a mobile terminal;

FIG. 9 illustrates a sequential diagram of the process of the data delivery device and the mobile terminal;

FIG. 10 is an operating flow diagram of a change candidate time calculator; and

FIG. 11 (a) is an illustrative view of a reserved table of the network allowable transfer capacity included in the change candidate time calculator 103 and period of time, and FIG. 11 (b) is other exemplary reserved table.

### DESCRIPTION OF THE PREFERRED EMBODIMENTS

The data delivery device and the method for changing the data delivery time according to the present invention will be described hereinafter, on the basis of the accompanying drawings.

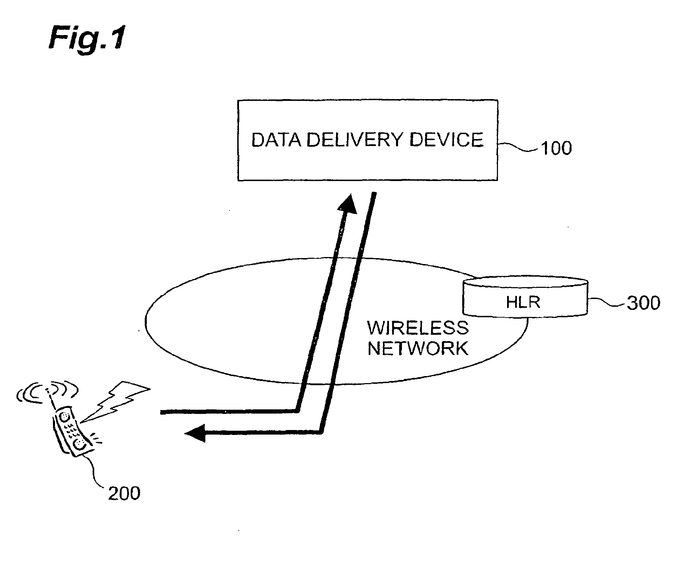

Initially, the relation of a data delivery device 100 and a mobile terminal 200 on a network will be described. FIG 1 is the system constructive view of using the data delivery device 100 and the mobile terminal 200.

The data delivery device 100 can communicate with the mobile terminal 200 through the wireless network. The mobile terminal 200 requests that the data delivery device 100 should deliver the data such as pattern data to the mobile terminal 200 at predetermined time. With receiving the request, the data delivery device 100 delivers the data that is previously stored to the mobile terminal 200 in response to the request.

Further, the data delivery device 100 of the present invention delivers the data concerning the delivery request to the mobile terminal 200, and also delivers the information that indicates a delivery request time to the mobile terminal 200, when the traffic of the network is not high and the requests from other mobile terminals are few, to which the mobile terminal 200 should change the current delivery request time.

HLR (Home Location Resister) 300 is the management device, which manages the position information of the mobile terminal 200 arranged on the network. The position information of the mobile terminal 200 is created by transmitting the information that specifies the mobile terminal, whenever the mobile terminal 200 moves from the current wireless base station to another, to the HLR 300 from the wireless base station which has become the destination by moving of the mobile terminal; the position information is composed of the information that specifies the wireless base station (such as a name of the wireless base station). The HLR 300 judges the wireless base station that the mobile terminal 200 will use, and notifies both information that specifies the wireless base station and the mobile terminal to the data delivery device 100 according to the present invention.

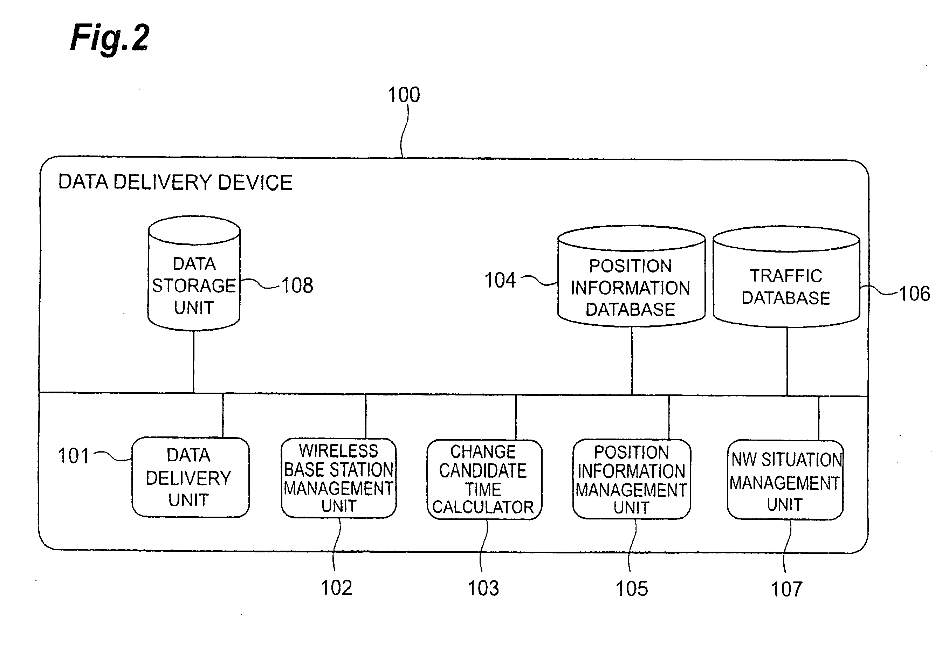

The detail of the data delivery device 100 and the mobile terminal 200 will be described hereinafter. FIG. 2 is a block constructive view of the data delivery device 100.

The data delivery device 100 includes, as shown in FIG. 2, a data delivery unit 101, a wireless base station management unit 102, a change candidate time calculator 103 (decision means of the present invention), a position information database 104, a position information management unit 105 (position information management means of the present invention), a traffic database 106, a NW (network) situation management unit 107 (network situation management means of the present invention), and a data storage unit 108.

The data delivery unit 101 delivers data such as pattern data for an antivirus program stored in the data storage unit 108, be described later, to the mobile terminal 200 that carries out delivery request, and delivers the time information that indicates the changed delivery request time to the mobile terminal 200. Further, the data delivery unit 101, in response to reception of the request of the data delivery from the mobile terminal 200, notifies the message of the request to the wireless base station management unit 102 and the change candidate time calculator 103, be descried later.

The wireless base station management unit 102 manages the allowable transfer capacity of the network of the wireless base station being used by the mobile terminal 200 that carries out the delivery request. First, when the delivery request comes from the mobile terminal 200, the wireless base station management unit 102 calculates the transfer capacity needed in the wireless base station on the basis of the data size of the data that is requested to be delivered from the mobile terminal 200 and the transfer rate of the network. The wireless base station management unit 102 calculates the allowable transfer capacity of the network of the wireless base station on the basis of the calculated transfer capacity, the transfer capacity that is actually used in the wireless base station being used by the mobile terminal 200, and the total transfer capacity of the network of the wireless base station.

The wireless base station management unit 102 notifies the change candidate time calculator 103 to carry out the changing process of the time for carrying out the delivery request by the mobile terminal 200, if the calculated allowable transfer capacity of the network of the wireless base station is less than or equal to the predetermined allowable transfer capacity. The allowable transfer capacity management unit 102 notifies the data delivery unit 101 to deliver the data, if the allowable transfer capacity of the wireless base station is greater than the predetermined allowable transfer capacity. The data delivery device 100 has received, when the mobile terminal 200 requests data delivery, the information that indicates the transfer capacity of the network that is actually used in the wireless base station, from the wireless base station being used by that mobile terminal 200. In addition, it may use amount of predictive traffic, be described later, which is stored in advance, instead of the transfer capacity actually used.

The change candidate time calculator 103 is composed so as to decide the data delivery time again and calculates a new time when the mobile terminal carries out delivery request on the basis of the amount of the traffic between the mobile terminal and the network with the command from the wireless base station management unit 102, when judging that the allowable transfer capacity of the network of the wireless base station communicating with the mobile terminal at the scheduled time is less than or equal to the predetermined threshold. That is, the change candidate time calculator 103 detects the wireless base station that will be used by the mobile terminal at the destination where it intends to move, and extracts the predictive period of time in the detected wireless base station when the traffic of the network is not high, on the basis of the data size of the data to be delivered, the information, created by the position information management unit 105, be described later, which specifies the wireless base station that will be used by the mobile terminal at the destination where it intends to move, and the information, created by the NW situation management unit 107, be described later, which indicates amount of the predicted traffic of the network of each wireless base station.

The change candidate time calculator 103 calculates the time when the mobile terminal requests the delivery, by deciding the delivery time of the data so as to level out the transfer amount of the network that is managed from minute to minute during the extracted period of time by using the calculated delivery time from the transfer rate of the network and the data size of the data to be delivered. The detail will be described later.

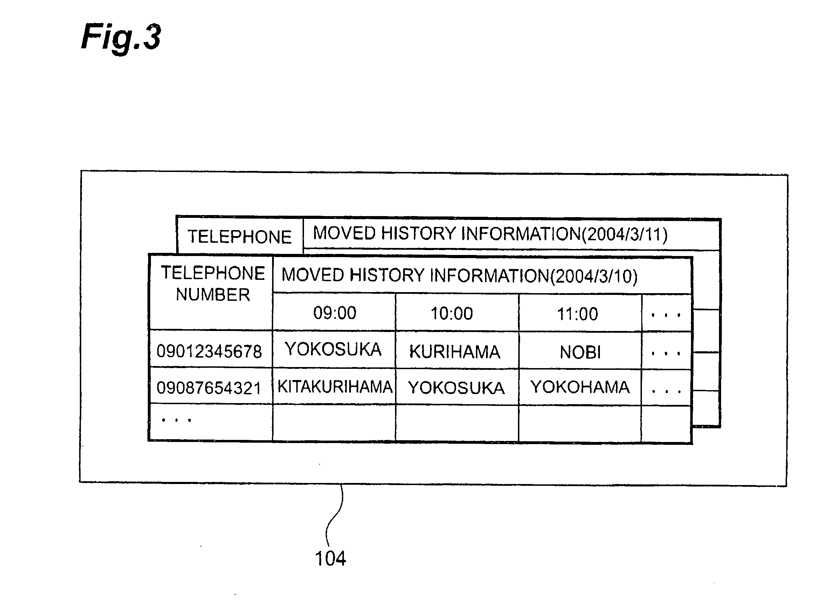

The position information database 104 stores the moved history that indicates the change of the position of the mobile terminal (destination) which requests the data delivery. FIG. 3 is an illustration of concrete of the moved history information that indicates the moved history of the mobile terminal stored in the position information database 104.

As shown in FIG. 3, the telephone number that specifies the mobile terminal, the name of the wireless base station of the destination, and the period of time during which the mobile terminal exists are described for each day in the moved history information stored in the position information database 104.

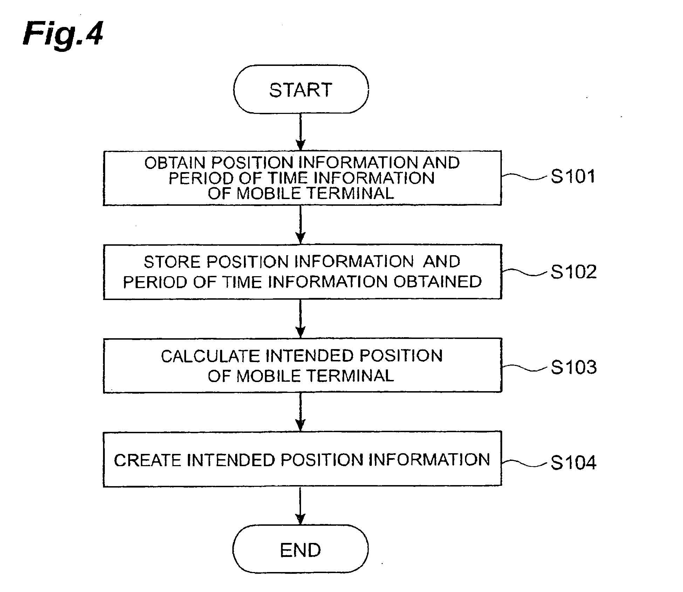

The position information management unit 105 creates and stores the intended position information that indicates the intended destination organized during the period of time of each mobile terminal on the basis of the moved history information. The position information management unit 105 creates statistical information which indicates that the mobile terminal existed at the position (destination) during which period of time and in which wireless base station, on the basis of the moved history information of the mobile terminal stored in the position information database 104. The position information management unit 105 specifies the wireless base station under a high traffic during every period of time as the intended destination in the future during every period of time on the basis of the created statistical information, and stores it with correspondence to the period of time and the wireless base station becoming the intended destination. The concrete process will be described in the figure. FIG. 4 is a process flow diagram when the information that indicates the intended destination is created.

The position information management unit 105 obtains, whenever the mobile terminal moves from the current wireless base station to another, the position information of the mobile terminal and the period of time during which the mobile terminal uses that wireless base station from the HLR 300, which has stored the position information of the mobile terminal through the data delivery unit 101, and obtains the information that specifies the wireless base station that the mobile terminal uses, the period of time during which the mobile terminal uses the wireless base station, and the information that specifies the mobile terminal (S 101) . Consequently, the position information database 104 stores the moved history information consisting of the obtained information that specifies the wireless base station which the mobile terminal uses, the period of time during which the mobile terminal uses the wireless base station, and information that specifies the mobile terminal (S 102).

Next, the position information management unit 105 retrieves the moved history information of the mobile terminal from the position information database 104, carries out the statistical process on the basis of the information that specifies the mobile terminal (telephone number) and the period of time, and extracts the wireless base station which each mobile terminal often uses during each period of time (S 103). The position information management unit 105 associates the information that specifies the mobile terminal and the wireless base station which the mobile terminal often uses during each period of time, and stores the associated intended position information of the mobile terminal (S 104).

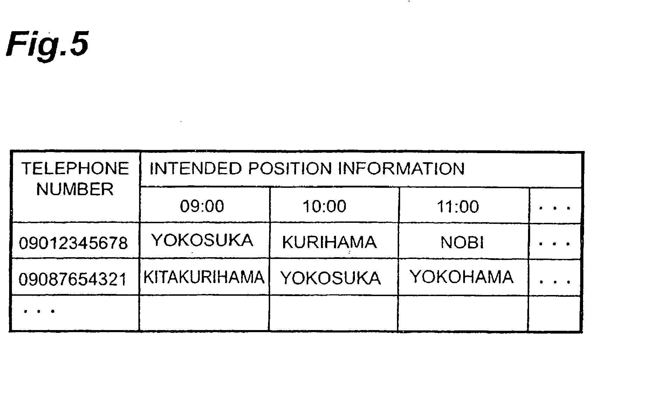

Concrete of the intended position information is shown in FIG. 5. FIG. 5 is the illustrative view of the intended position information created by the process above. As shown in FIG. 5, the telephone numbers that specify the mobile terminals, period of times, and names of the wireless base station (such as Yokosuka, Kurihama) are associated with each other and stored.

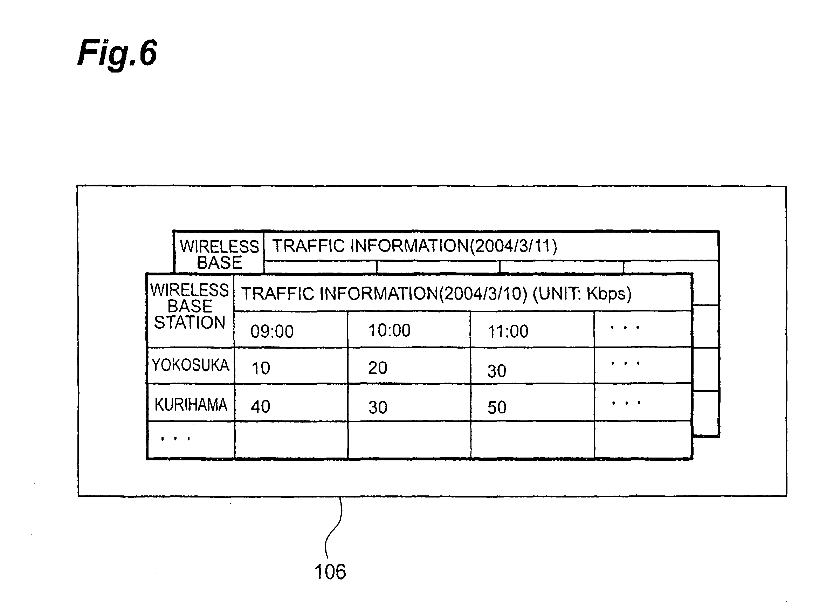

Returning back to FIG. 2, the traffic database 106 stores the traffic information in the wireless base station wirelessly communicating with the mobile terminal. The traffic information is transmitted from the wireless base station. FIG. 6 is an illustrative view of a concrete example that stores the traffic information. As shown in FIG. 6, the traffic database 106 associates the wireless base station, period of time, and traffic amount (transfer capacity) and stores them as traffic information, and stores the traffic information with distinction by days and days of the week.

The NW situation management unit 107 statistically manages the traffic information that indicates the past traffic amount in each wireless base station and the predictive traffic information that indicates the traffic amount predicted in hours, calculates the traffic amount in each wireless base station during every period of time by using the traffic information stored in the traffic database 106, and stores the calculated average value of the past traffic amount during every period of time as the predictive traffic information in each wireless base station.

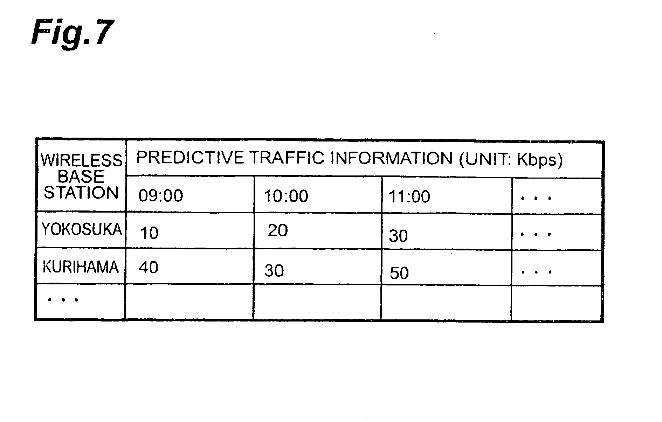

The predictive traffic information will be described by using FIG. 7. FIG. 7 shows the illustrative view of the predictive traffic information. As shown in FIG. 7, the traffic database 106 associates the traffic amount (transfer capacity) associated with each period of time in each wireless base station and stores it. In addition, though the traffic information shows one kind of traffic information in FIG. 7, the traffic database 106 may store the predictive traffic information that indicates the traffic amount predicted with distinction by day of the week, for example may store the predictive traffic information that indicates the traffic amount predicted on Monday.

The data storage unit 108 stores data such as pattern data of the antivirus program which the data delivery unit 101 delivers.

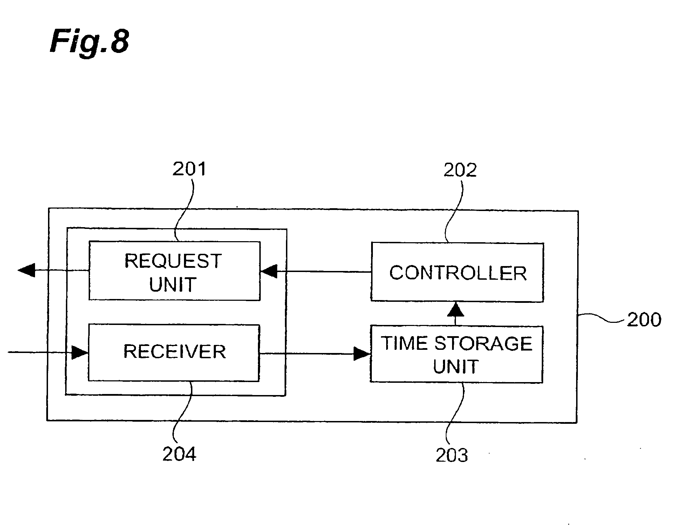

Next, the mobile terminal 200, being the destination to which the data delivery device 100 delivers data, which is the object of change at the time when the delivery request of the data is carried out, will be described. FIG. 8 is an illustrative view of a block diagram of the mobile terminal 200.

Because the mobile terminal 200 is the mobile telephone, though it has the functions of calling/receiving and data communication by using the Internet, these are omitted in FIG. 8.

The mobile terminal 200 has the fundamental functions as a mobile terminal, and includes a request unit 201, a controller 202, a time storage unit 203, and a receiver 204.

The request unit 201 requests the data delivery device 100 to carry out the delivery of the data. The controller 202 controls causing the request unit 201 to carry out the delivery request of the data. The time storage unit 203 stores the time of carrying out the delivery request of the data to the data delivery device 100. When time reaches the stored time, the mobile terminal 200 will carry out the delivery request of the data to the data delivery device 100 by using the request unit 201 through the controller 202.

The receiver 204 receives the data from the data delivery device 100, receives the changing command of the time of carrying out the data delivery request and the changed time information, and changes the time information to be stored into the time storage unit 203 above.

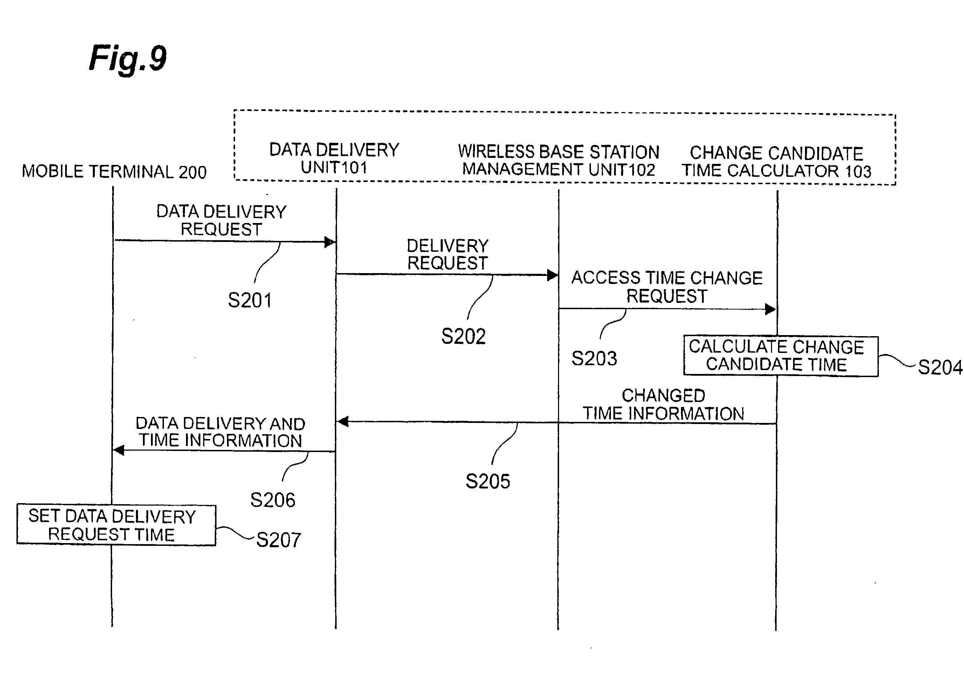

The process of the request of the data delivery and changing the time to request in the data delivery device 100 and the mobile terminal 200 constructed above will be described. FIG. 9 illustrates a sequential diagram at the time of the request of the data delivery and changing the time to request.

First, the mobile terminal 200 carries out a request for obtaining the data to the data delivery device 100, when time has reached the predetermined time stored in the time storage unit 203 (S 201). With receiving the request of the data delivery from the mobile terminal 200, the data delivery unit 101 notifies the delivery request from the mobile terminal 200 to the wireless base station management unit 102 (S 202). The wireless base station management unit 102, in response to the delivery request from the mobile terminal, calculates the needed transfer capacity in the wireless base station through the data size of the data of interest as the delivery request, and requests the change candidate time calculator 103 to change the time when the mobile terminal carries out the delivery request, if the allowable transfer capacity calculated from the calculated transfer capacity, the total transfer capacity of the network, and the already used transfer capacity in the wireless base station becomes less than or equal to the predetermined allowable transfer capacity (S 203).

The change candidate time calculator 103 that receives the request of change carries out the change candidate time (S 204). This calculating process will be described in detail hereinafter.

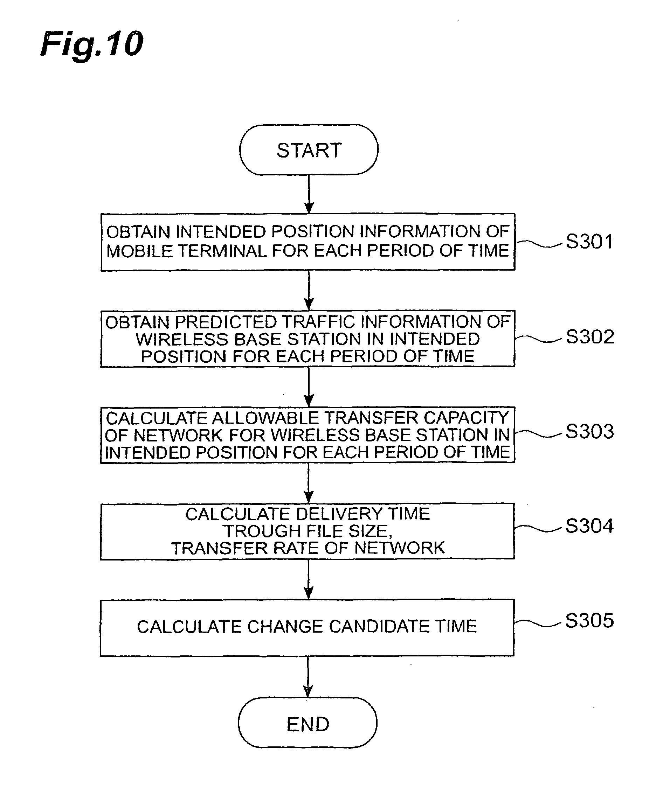

FIG. 10 is an operating flow diagram, through which the change candidate time calculator 103 calculates the time when the load of the data delivery device 100 and the network is not heavy with respect to the time when the mobile terminal 200 requests the data delivery.

First, the change candidate time calculator 103 obtains the intended destination of the mobile terminal 200 during every period of time from the intended position information of the position information management unit 105 (S 301). Next, the change candidate time calculator 103 obtains the predictive traffic information of the wireless base station during every period of time, which the mobile terminal 200 uses at the intended position, from the NW situation management unit 107 on the basis of the intended position information obtained (S 302). Then, the change candidate time calculator 103 calculates the allowable transfer capacity within the total transfer capacity in the wireless base station, which the mobile terminal 200 can use in the intended position during every period of time. The allowable transfer capacity is calculated through subtracting the traffic amount indicated by the predictive traffic information above from the total transfer capacity (unit is Kbps) that can transfer to the mobile terminals wireless communicating with the wireless base station (S 303). Accordingly, it indicates not the actual allowable transfer but the ideal one.

Next, with operating the (data size)/(transfer rate) on the basis of the data size to deliver and the data transfer rate of the network in the wireless base station, the change candidate time calculator 103 calculates the transfer time needed for transferring the data (S 304).

Then, the change candidate time calculator 103 calculates the change candidate time being a new time when the mobile terminal 200 requests the delivery, on the basis of the allowable transfer capacity (unit is Kbps) of the network in the wireless base station above and the delivery time needed for transferring the data (S 305). Concretely, the change candidate time calculator 103 initially extracts the wireless base station having the period of time of large allowable transfer capacity, on the basis of the information that indicates the calculated allowable transfer capacity of the network in each wireless base station. Then, the change candidate time calculator 103 creates a reserved table with correspondence between the allowable transfer capacity of the network and delivery start time during the period of time with the largest allowable transfer capacity of the extracted wireless base station.

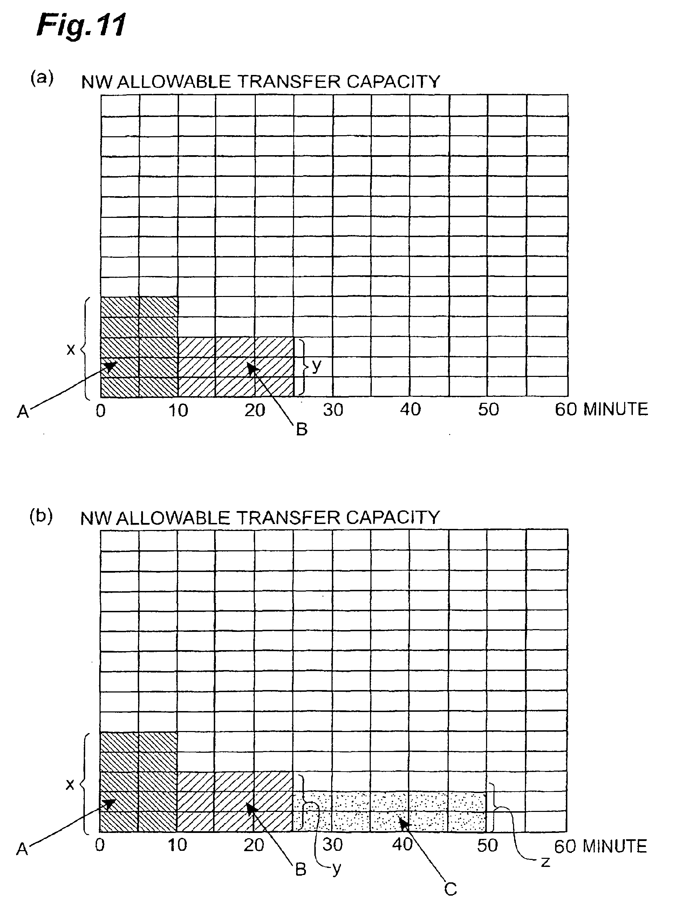

FIG. 11 is an illustrative view of the reserved table. The change candidate time calculator 103 has the reserved table shown in FIG. 11 for each period of time corresponding to the wireless base station. The reserved table, as shown in FIG. 11(a) and FIG.11 (b), is composed of the vertical axis indicating the allowable transfer capacity (Kbps) of the network and the horizontal axis indicating the delivery start time, and is the table in which the mobile terminal 200 will enter the scheduled period of time during which the mobile terminal 200 uses the wireless base station. Then, the change candidate time calculator 103 writes the rectangular area in this reserved table, which is composed of the transfer rate (Kbps) of the mobile terminal in the vertical direction and the data delivery time in the horizontal direction, whereby the delivery reservation will be entered.

The example of FIG. 11 (a) shows the status in which other mobile terminals are already entered in the area indicated as A (data transfer capacity is x (Kbps), delivery time is 10 minutes, start time is 0 minute) and the area indicated as B (data transfer capacity is y (Kbps), delivery time is 15 minutes, start time is 10 minutes). With the status in which this information is entered, when a new reservation is entered, it is understood that reservation can be made between 25 minutes and 60 minutes. In this, the change candidate time calculator 103 sets the delivery start time at 25 minutes of this period of time, adds the calculated data delivery time to the delivery start time, and verifies whether the delivery will be finished within the period of time, where feasible, decides 25 minutes of the period of time as the delivery start time.

Conversely, when the change candidate time calculator 103 judges that the delivery will be not finished within the period of time, it decides the delivery start time on the basis of the status that accumulated on the entry information of other data deliveries already entered so as to even the allowable transfer capacity of the network during the period of time. Concretely, in order to make the status in which the data delivery can be carried out at earliest possible period of time while globally flattening the allowable transfer capacity of the network during the period of time (making the allowable transfer capacity of the network uniform value), the change candidate time calculator 103 decides the start time.

The change candidate time calculator 103, as shown in FIG. 11(b), decides 25 minutes of the period of time as the start time of the data delivery, decides the end time of the data delivery on the basis of the data delivery time, and can reserve the area indicated by C in the reserved table (data transfer capacity z (bps), delivery time 25 minutes, start time 25 minutes) (assuming: the above calculated data delivery time is 25 minutes). When data is entered in the reserved table, the change candidate time calculator 103 carries out the process of adding the transfer capacity entered in the reserved table to the predictive traffic information created by the NW situation management unit 107. This process is for managing the actual predicted transfer capacity (traffic amount) in the period of time.

In addition, since the transfer capacity that the mobile terminal using the wireless base station can use is entered in the direction of the vertical axis, a difference occurs in transfer capacity that can be entered, due to the data communicating rate (normal transfer rate type: next generation high transfer rate type). Further, if this wireless base station is selected at next reserved entering process, the allowable transfer time is extracted at the status shown in FIG. 11 (b). Furthermore, though the reserved table in 5 minute increments is used in FIG. 11, if a reserved table in smaller interval such as 1 minute or 30 second increments is used, it will be possible to set a smaller time.

In this way, it is possible to select a specific period of time of a network having an allowable transfer capacity, to decide the delivery time in detail by using the reserved table within the selected period of time. In this embodiment, the data delivery device 100 judges whether changing the time of the data delivery or not, on the basis of the time when the delivery request comes from the mobile terminal, so that there is a time error between the delivery request and the actual beginning of data delivery, but this error is ignored in this embodiment. It is preferable to decide the time of the data delivery and judge necessity of changing the time of the data delivery, considering the time difference from the delivery request to the actual beginning of data delivery.

Returning back to FIG. 9, the change candidate time calculator 103 notifies the calculated change candidate time to the data delivery unit 101 (S 205). The data delivery unit 101 delivers the calculated time information as the candidate and the data to be stored in the data storage unit 108 to the mobile terminal 200 (S 206).

The mobile terminal 200 receives the data and the time information that indicates change time, carries out the data updating process and the like, displays the new time to carry out the data request on a regular basis which is calculated by the data delivery device 100, and notifies the message of change to the time to the user. If the user accepts changing to the time, according to specific operation of the user, the controller 204 of the mobile terminal 200 carries out the process of changing the time information stored in the time storage unit 203 into the received time information (S 207).

The mobile terminal 200, the time information of which has been changed, carries out the request of the data delivery at the changed time, when next carrying out the request of the data delivery to the data delivery device 100.

In addition, though in the description above, since the time is stored in the mobile terminal 200 for carrying out the request of the data delivery to the data delivery device 100, the mobile terminal 200 is operating as in carrying out the request of the data delivery at the stored time, it may carry out the request of the data delivery to the data delivery device 100 at the time when the user operates.

The effect of the data delivery device 100 will be described.

In the construction of the present invention as described above, on the basis of the intended position information stored in the position information management unit 105 and the predictive traffic information stored in the NW situation management unit 107, by extracting the predicted traffic at the intended position of the mobile terminal 200 during every period of time, and on the basis of the extracted traffic predicted at the intended position of the mobile terminal 200 during every period of time, by deciding the data delivery time, it is possible to decide the delivery time in order that the traffic amount does not become high at the intended position of the mobile terminal 200, accordingly, it is possible to prevent the traffic amount from becoming high. Further, it is possible to prevent the load of the data delivery device from becoming high, which processes delivery at the same period of time due to increase in the number of delivery destinations to deliver data at regular intervals. Furthermore, it is possible to prevent the data from not being obtained by the user, with communication constraint of the communication provider due to the traffic amount that has become high.

In addition, with the command from the wireless base station management unit 102, the change candidate calculator 103 decides the delivery time of data again, in case of judgement that the allowable transfer capacity of the network of the wireless base station which the mobile terminal uses at its predicted delivery time is less than or equal to the predetermined threshold value, so that it is possible to prevent the loss of the user's convenience due to frequent change of delivery time of data.

## Claims

1. A data delivery device (100) for delivering data to a mobile terminal (200), comprising:
a traffic information storage means (106) for storing traffic information; **characterized by**
the traffic information storage means (106) for storing predictive traffic information concerning predicted traffic at each position during every period of time;
a position information storage means (104) for storing intended position information that concerns an intended position of the mobile terminal (200) during every period of time; and
a decision means (103) for extracting the predicted traffic at the intended position of the mobile terminal (200) during every period of time, on the basis of the intended position information stored in the position information storage means and the predictive traffic information stored in the traffic information storage means (106), and for deciding the delivery time of data, on the basis of the extracted traffic predicted at the intended position of the mobile terminal (200) during every period of time.

2. The data delivery device (100) according to claim 1, wherein the decision means (103) have a function that decides the delivery time of the data again, when judging that allowable transfer capacity of network of a wireless base station with which the mobile terminal (200) communicates at the predicted delivery time of the data is less than or equal to a predetermined threshold.

3. A method for changing a delivery time of data of a data delivery device (100) that delivers the data to a mobile terminal (200) at a predetermined time, the method
**characterized by** comprising the steps of:
extracting predicted traffic at an intended position of the mobile terminal during every period of time (S301), on the basis of intended position information that concerns an intended position of the mobile terminal during every period of time and predictive traffic information concerning predicted traffic at each position during every period of time; and
deciding the delivery time of data (S304), on the basis of the extracted traffic predicted at the intended position of the mobile terminal during every period of time.

## Patentansprüche

1. Eine Vorrichtung zur Datenübermittlung (100) zur Übermittlung von Daten an ein mobiles Endgerät (200) aufweisend:
ein Mittel zum Speichern von Verkehrsinformationen (106), um Verkehrsinformationen zu Speichern; **gekennzeichnet durch**
das Mittel zum Speichern von Verkehrsinformationen (106) zum Speichern von vorhersagender Verkehrsinformation betreffend vorhergesagten Verkehr an jeder Position während jedes Zeitabschnitts;
ein Mittel zum Speichern von Positionsinformationen (104) zum Speichern einer Information einer beabsichtigten Position, welche eine beabsichtigte Position des mobilen Kommunikationsendgerätes (200) während jedes Zeitabschnittes betrifft; und
ein Mittel zum Entscheiden (103), um den vorhergesagten Verkehr an der beabsichtigten Position des mobilen Kommunikationsendgerätes (200) während jedes Zeitabschnittes auf der Basis der beabsichtigen Positionsinformation, die in dem Mittel zum Speichern der Positionsinformation gespeichert ist und der vorhersagenden Verkehrsinformation, welche in dem Mittel zum Speichern von Verkehrsinformationen (106) gespeichert ist, zu extrahieren und um die Übermittlungszeit von Daten auf der Basis des extrahierten Verkehrs, welcher an der beabsichtigten Position des mobilen Kommunikationsendgerätes (200) während jedes Zeitabschnitts vorhergesagt wird zu entscheiden.

2. Die Vorrichtung zur Datenübermittlung (100) nach Anspruch 1, worin das Mittel zur Entscheidung (103) eine Funktion aufweist, welche die Übermittlungszeit der Daten neu entscheidet, wenn es bewertet wird, dass die erlaubte Übermittlungskapazität des Netzwerks von einer Funkbasisstation mit der das mobile Kommunikationsendgerät - (200) kommuniziert, zu der vorhergesagten Übermittlungszeit der Daten kleiner oder gleich ist wie ein vorgegebener Schwellenwert.

3. Ein Verfahren zum Ändern einer Übermittlungszeit von Daten von einer Vorrichtung zur Datenübermittlung (100), welche die Daten an ein mobiles Kommunikationsendgerät (200) zu einer vorbestimmten Zeit übermittelt, wobei das Verfahren **dadurch gekennzeichnet ist, dass** es die Schritte aufweist des:
Extrahierens von vorhergesagtem Verkehr an einer beabsichtigten Position des mobilen Kommunikationsendgerätes während jedes Zeitabschnittes (S301), auf der Basis einer Information einer beabsichtigten Position, welche eine beabsichtigte Position des mobilen Kommunikationsendgerätes während jedem Zeitabschnitt betrifft und von vorhersagender Verkehrsinformation, welche einen vorhergesagten Verkehr an jeder Position während jedes Zeitabschnitts betrifft; und
des Entscheidens der Übermittlungszeit der Daten (S304), auf der Basis des extrahierten Verkehrs, der an der beabsichtigten Position des mobilen Kommunikationsendgerätes während jedem Zeitabschnitt vorhergesagt wird.

## Revendications

1. Appareil de fourniture de données (100) servant à fournir des données à un terminal mobile (200), comprenant :
des moyens de stockage d'information de trafic (106) pour stocker une information de trafic ; **caractérisé par**
les moyens de stockage d'information de trafic (106) servant à stocker une information prévisible de trafic concernant un trafic prédit au niveau de chaque position pendant chaque période de temps ;
des moyens de stockage d'information de position (104) pour stocker une information de position attendue qui concerne une position attendue du terminal mobile (200) pendant chaque période de temps ; et
des moyens de décision (103) pour extraire le trafic prédit au niveau de la position attendue du terminal mobile (200) pendant chaque période, sur la base de l'information de position attendue stockée dans les moyens de stockage d'information de position et de l'information prévisible de trafic stockée dans les moyens de stockage d'information de trafic (106), et pour décider du moment de fourniture des données, sur la base du trafic extrait prédit au niveau de la position attendue du terminal mobile (200) pendant chaque période de temps.

2. Appareil de fourniture de données (100) selon la revendication 1, dans lequel les moyens de décision (103) ont une fonction qui décide de nouveau le moment de fourniture des données, quand on estime que la capacité de transfert admissible du réseau d'une station de base de radiodiffusion avec laquelle le terminal mobile (200) communique au moment prédit de fourniture des données est inférieure ou égale à un seuil prédéterminé.

3. Procédé pour modifier un temps de distribution de données d'un appareil de fourniture de données (100) qui fournit les données à un terminal mobile (200) à un moment prédéterminé, le procédé étant **caractérisé en ce qu'**il comporte les étapes consistant à :
extraire un trafic prédit au niveau d'une position attendue du terminal mobile pendant chaque période de temps (S301), sur la base d'une information de position attendue qui concerne une position attendue du terminal mobile pendant chaque période de temps et une information de trafic prévisible concernant un trafic prédit au niveau de chaque position pendant chaque période de temps; et
décider le moment de fourniture des données (S304) sur la base du trafic extrait prédit au niveau de la position attendue du terminal mobile pendant chaque période de temps.
